# EUROPEAN PATENT SPECIFICATION

(11) **EP 1 155 066 B1**
(45) Date of publication and mention of the grant of the patent: **27.11.2002**
(21) Application number: 99961575.0
(22) Date of filing: 04.11.1999
(51) Int. Cl.: C08J 3/20, C08K 9/04, C08K 9/08

(54) **NANOCOMPOSITE**
NANOVERBUNDSTOFF
NANOCOMPOSITE

(30) Priority: 05.11.1998 US 107235 P; 18.11.1998 US 108979 P
(43) Date of publication of application: 21.11.2001
(73) Proprietor: Dow Global Technologies, Inc., Midland, Michigan 48674 (US)
(72) Inventor: CHOU, Chai-Jing, Missouri City, TX 77549 (US); GARCIA-MEITIN, Eddy, I., Angleton, TX 77515 (US)
(74) Representative: Weiss, Wolfgang, Dipl.-Chem. Dr.
(86) International application number: US9925974
(87) International publication number: WO00029467

(56) References cited:
- EP-A- 0 459 472
- WO-A-93/04117
- US-A- 4 558 075

## Description

This invention relates to polymers reinforced with delaminated or exfoliated multi-layered silicates, that is, nanocomposite polymers.

Nanocomposite polymers are compositions comprising a relatively high number (but relatively low weight) of preferably single layers of exfoliated silicate material dispersed in a given volume of continuous polymer matrix, see United States Patent 5,717,000 to Seema V. Karande, Chai-Jing Chou, Jitka H. Solc and Kyung W. Suh, United States Patent Application Serial Number 034,620 filed December 31, 1998 and Giannelis, "Polymer Layered Silicate Nanocomposites", Advanced Materials, 1996, 8, No. 1, pages 29-35. As discussed in the '000 patent and as is well known in the art, nanocomposite polymers exhibit many increased physical property enhancements at a much lower weight percent of filler than conventionally filled polymers. Other patent literature disclosing nanocomposites include United States Patents 4,810,734, 4,558,075 and 3,516,959; as well as WO 93 04117 A and EP-A-0 459 472. Edge coating of multi-layer silicate material is known, see United States Patents 4.434.075 and 4,964,918.

However, it can be difficult to get the multi-layer silicate material to exfoliate into the polymer.

The instant invention is a solution, at least in part, to the above stated problem. In one embodiment, the instant invention is a process for producing a nanocomposite polymer by dispersing a multi-layered silicate material into a thermoplastic polymer. The process comprises the step of mixing a quatemary ammonium intercalated multi-layered silicate material with the thermoplastic polymer at a temperature greater than the melting or softening point of the thermoplastic polymer, characterized by the quaternary ammodium intercalated multi-layered silicate material having been reacted with a polyvalent anionic organic material so that the edges of the multi-layered silicate material are bound to the polyvalent anionic organic material to form a polyvalent anionic organic edge coated quatemary ammonium intercalated multi-layered silicate material.

The instant invention in another embodiment is a process for producing a nanocomposite polymer by dispersing a multi-layered silicate material into a thermoset polymer. The process of this embodiment comprises the steps of (a) mixing a quaternary ammonium intercalated multi-layered silicate material with a thermoset prepolymer, characterized by the quatemary ammonium intercalated multi-layered silicate material having been reacted with a polyvalent anionic organic material so that the edges of the multi-layered silicate material are bound to the polyvalent anionic organic material to form a polyvalent anionic organic edge coated quaternary ammonium intercalated multi-layered silicate material; and (b) curing the thermoset prepolymer to set the thermoset polymer.

The instant invention in yet another embodiment is a composition comprising: (a) a polymer; and (b) a multi-layered silicate material dispersed in the polymer, the multi-layered silicate material having edges, characterized by at least a portion of the edges of the multi-layered silicate material being bound to a polyvalent anionic organic material.

The instant invention in further yet another embodiment is process for producing a nanocomposite polymer, comprising the steps of: (a) mixing a quaternary ammonium intercalated multi-layered silicate material with a monomer, characterized by the quatemary ammonium intercalated multi-layered silicate material having been reacted with a polyvalent anionic organic material so that the edges of the multi-layered silicate material are bound to the polyvalent anionic organic material to form a polyvalent anionic organic edge coated quaternary ammonium intercalated multi-layered silicate material; and (b) polymerizing the monomer.

Montmorillonite day (a multi-layered silicate material) is stirred in water with an excess of 3,400 molecular weight sodium polyacrylate (a polyvalent anionic copolymer of mole ration 1:1 of ethylene and acrylic acid) available from the Rhone-Poulenc Company to edge treat the clay. The edge treated clay is then stirred with an excess of a mixed quaternary ammonium compound (68 percent bis hydroxyethyl, dodecyl, methyl-quatemary ammonium compound and 32 percent bis hydroxy C-6 to C-9, dodecyl, methyl-quaternary ammonium compound) to produce a polyacrylate edge coated quatemary ammonium intercalated montmorillonite. The polyacrylate edge coated quaternary ammonium intercalated montmorillonite is washed with water and dried. Ninety five parts of ethylene adipate thermoplastic polyurethane (available from The Dow Chemical Company) is melted (or softened) in a polymer mixer at 160 degrees Celsius at 200 rpm. Five parts of the dried polyacrylate edge coated quaternary ammonium intercalated montmorillonite, as described above in this paragraph, is added to the mixer and mixed for five minutes. Transmission light microscopic examination of the product shows significantly fewer one hundred micrometer sized clay clusters relative to the use of non-edge coated material. Transmission electron microscopic examination of the product shows single and multiple layer exfoliation of the silicate layers of the montmorillonite. The layers are counted in a representative view. Most preferably, more of the layers are present as single layers than are present as multiple layers. In any event the dispersion of the layers into the polymer is improved using the instant invention relative to the use of a non-edge-coated material.

Polyvalent anionic organic materials are organic chemicals that have more than one carboxylic acid or other anionic substituant such as a sulfonate or a phosphonate. Preferably the polyvalent anionic organic material is a polyvalent anionic polymer. Most preferably, the polyvalent anionic organic material is polyacrylic acid. However, the specific polyvalent anionic organic material used in the instant invention is not critical and can include, without limitation thereto, for example, copolymers of styrene and acrylic acid or styrene and sulfoethylmethacylate.

The above referred to '000 patent and the '620 patent application list exemplary multi-layered silicate materials required in the instant invention. For example, the multi-layered silicate material can be, without limitation thereto: montmorillonite; nontronite; beidellite; volkonskoite; hectorite saponite; sauconite; magadiite; medmontite; kenyaite; laponite, mica, fluoromica and vermiculite. The above referred to '000 patent and '620 patent application also lists exemplary onium or quatemary ammonium compounds required in the instant invention. For example, the onium compound can be, without limitation thereto, quatemary ammonium compounds having octadecyl, hexadecyl, tetradecyl or dodecyl moieties. However, the specific multi-layered silicate materiel or onium compound used in the instant invention is not critical.

However, it should be understood that it is preferable to use polar substituted quatemary ammonium compounds with relatively polar polymers such as nylons and polyurethanes. Similarly, it is preferable to use non-polar substituted quatemary ammonium compounds with relatively non-polar polymers such as polypropylene and polyethylene. The terms "polar" and "non-polar" are used in their conventional sense. For example, a polar substituted quaternary ammonium compound is a quaternary ammonium compound having a hydroxy ethyl (C2OH) or hydroxy hexyl (C6OH) substituent(s).

The selection of a preferred quatemary ammonium compound is aided by comparing the electron photomicrographs of the nanocomposites made using the quatemary ammonium compounds being tested in the instant invention to determine which quaternary ammonium compound(s) give the greatest degree of exfoliation of the multi-layered silicate. Of course, physical property improvement of the nanocomposite v. the base polymer is the final objective of the Instant Invention but such Improvement is often a function of the degree of exfoliation of the multi-layered silicate.

In addition to mixing the polyvalent anionic organic quaternary ammonium intercalated multi-layered silicate material with a molten thermoplastic polymer, the instant invention also includes mixing the polyvalent anionic organic quaternary ammonium intercalated multi-layered silicate material with a monomer(s) or thermoset prepolymer(s) followed by the polymerization of the monomer(s)/prapolymer(s). Examples of thermoplastic polymers include, without limitation thereto, polypropylene, polyethylene, polystyrene, polystyrene copolymers, acryllc polymers, acetyl polymers, thermoplastic elastomers, urethane, epoxy, polyester, nylon, polycarbonate, and blends thereof. Examples of thermoset polymers include, without limitation thereto, epoxy, phenolic, urethane, rubber, and blends thereof.

## Claims

1. A process for producing a nanocomposite polymer by dispersing a multi-layered silicate material into a thermoplastic polymer, comprising the step of mixing a quatemary ammonium intercalated multi-layered silicate material with the thermoplastic polymer at a temperature greater than the melting or softening point of the thermoplastic polymer, **characterized by** the quatemary ammonium intercalated multi-layered silicate material having been reacted with a polyvalent anionic organic material so that the edges of the multi-layered silicate material are bound to the polyvalent anionic organic material to form a polyvalent anionic organic edge coated quaternary ammonium intercalated multi-layered silicate material.

2. The process of Claim 1, wherein the thermoplastic polymer is selected from the group consisting of a thermoplastic urethane, a thermoplastic epoxy, a thermoplastic polyester, a thermoplastic nylon, a thermoplastic polycarbonate; and blends thereof.

3. The process of Claim 1 or Claim 2. wherein the polyvalent anionic organic edge treated quaternary ammonium intercalated multi-layered silicate material exfoliates to produce single layers of silicate material and multiple layers of silicate material, the weight percent of the single layers of silicate material being greater than the weight percent of the multiple layers of silicate material as determined by transmission electron microscopy.

4. The process of Claim 1 or Claim 3, wherein the thermoplastic polymer is a blend thermoplastic polymers.

5. A process for producing a nanoccmposite polymer by dispersing a multi-layered silicate material into a thermoset polymer, comprising the steps of:
(a) mixing a quaternary ammonium intercalated multi-layered silicate material with a thermoset prepolymer, **characterized by** the quatemary ammonium intercalated multi-layered silicate material having been reacted with a polyvalent anionic organic material so that the edges of the multi-layered silicate material are bound to the polyvalent anionic organic material to form a polyvalent anionic organic edge coated quatemary ammonium intercalated multi-layered silicate material;
(b) curing the thermoset prepolymer to set the thermoset polymer.

6. The process of Claim 5, wherein the thermoset polymer is selected from the group consisting of a thermoset epoxy, a thermoset phenolic, a thermoset urethane, a thermoset rubber and biends thereof.

7. The process of Claim 5 or Claim 6, wherein the polyvalent anionic organic edge coated quatemary ammonium intercalated multi-layered silicate material exfoliates in step (a) to produce single layers of silicate material and multiple layers of silicate material, the weight percent of the single layers of silicate material being greater than the weight percent of the multiple layers of silicate material as determined by transmission electron microscopy.

8. The process of Claim 5 or Claim 7, wherein the thermoset polymer is a blend of thermoset polymers.

9. The process of Claim 1, wherein the thermoplastic polymer is selected from the group consisting of polypropylene, polyethylene, polystyrene, polystyrene copolymers, acrylic polymers, acetyl polymers and thermoplastic elastomers and blends thereof.

10. A composition comprising:
(a) a polymer; and
(b) a multi-layered silicate material dispersed in the polymer, the multi-layered silicate material having edges, **characterized by** at least a portion of the edges of the multi-layered silicate material being bound to a polyvalent anionic organic material.

11. The composition of Claim 10, wherein at least about one half of the edges of the multi-layered silicate material are bound to the polyvalent anionic organic material.

12. The composition of Claim 10 or Claim 11, wherein the polymer is selected from the group of thermoplastic polymers and thermoset polymers and blends thereof.

13. The composition of Claim 12, wherein the thermoplastic polymers and thermoset polymers are selected from the group consisting of a thermoplastic urethane, a thermoplastic epoxy, a thermoplastic polyester, a thermoplastic nylon, a thermoplastic polycarbonate, polypropylene, polyethylene, polystyrene, polystyrene copolymers, acrylic polymers, acetyl polymers, thermoplastic elastomers, thermoset epoxy, a thermoset phenolic, a thermoset urethane, a thermoset rubber and blends thereof.

14. The process of Claims 1-9, wherein the polyvalent anionic organic material is a polyacrylate.

15. The composition of Claims 10-13, wherein the polyvalent anionic organic material is a polyacrylate.

16. A process for producing a nanocomposite polymer, comprising the steps of:
(a) mixing a quaternary ammonium intercaiated multi-layered silicate material with a monomer, **characterized by** the quatemary ammonium intercalated multi-layered silicate material having been reacted with a polyvalent anionic organic material so that the edges of the multi-layered silicate material are bound to the polyvalent anionic organic material to form a polyvalent anionic organic edge coated quaternary ammonium intercalated multi-layered silicate material; and
(b) polymerizing the monomer.

17. The process of Claim 16, wherein the monomer is a blend of monomers.

18. The process of Claim 16, wherein the polymer is selected from the group consisting of a thermoplastic urethane, a thermoplastic epoxy, a thermoplastic polyester, a thermoplastic nylon, a thermoplastic polycarbonate, polypropylene, polyethylene, polystyrene, polystyrene copolymers, acrylic polymers, acetyl polymers, thermoplastic elastomers, thermoset epoxy, a thermoset phenolic, a thermoset urethane, a thermoset rubber and blends thereof.

19. The process of Claim 18, wherein the polyvalent anionic organic is a polyacrylate.

## Patentansprüche

1. Verfahren zum Herstellen eines Nanoverbundstoffpolymers durch Dispergieren eines Mehrschichtsilikatmaterials in einem thermoplastischen Polymer, umfassend den Schritt des Mischens eines Mehrschichtsilikatmaterials, in welches ein quarternäres Ammonium interkaliert ist, mit dem thermoplastischen Polymer bei einer Temperatur von größer als dem Schmelz- oder Erweichungspunkt des thermoplastischen Polymers, **dadurch gekennzeichnet, dass** das Mehrschichtsilikatmaterial, in das quarternäres Ammonium interkaliert ist, umgesetzt worden ist mit einem polyvalenten anionischen organischen Material, sodass die Ränder des Mehrschichtsilikatmaterials an das polyvalente anionische organische Material gebunden sind, um ein mit einem polyvalenten anionischen organischen Rand beschichtetes Mehrschichtsilikatmaterial, in welches quarternäres Ammonium interkaliert ist, zu bilden.

2. Verfahren nach Anspruch 1, worin das thermoplastische Polymer ausgewählt wird aus der Gruppe, bestehend aus einem thermoplastischen Urethan, einem thermoplastischen Epoxyharz, einem thermoplastischen Polyester, einem thermoplastischen Nylon, einem thermoplastischen Polycarbonat; und Gemischen davon.

3. Verfahren nach Anspruch 1 oder 2, worin das mit polyvalentem anionischem organischem Material randbehandelte Mehrschichtsilikatmaterial, in welches Ammonium interkaliert ist, aufblättert, um einzelne Schichten aus Silikatmaterial und Mehrfachschichten aus Silikatmaterial zu erzeugen, wobei gemäß Bestimmung durch Transmissionselektronenmikroskopie die Gewichtsprozent der Einzelschichten aus Silikatmaterial größer als die Gewichtsprozent der Mehrfachschichten aus Silikatmaterial sind.

4. Verfahren nach Anspruch 1 oder Anspruch 3, worin das thermoplastische Polymer ein Gemisch aus thermoplastischen Polymeren ist.

5. Verfahren zum Herstellen eines Nanoverbundstoffpolymers durch Dispergieren eines Mehrschichtsilikatmaterials in einem thermohärtbaren Polymer, umfassend die Schritte:
(a) Mischen eines Mehrschichtsilikats, in welches quarternäres Ammonium interkaliert ist, mit einem thermohärtbaren Präpolymer, **dadurch gekennzeichnet, dass** das Mehrschichtsilikatmaterial, in welches quarternäres Ammonium interkaliert ist, umgesetzt worden ist mit einem polyvalenten anionischen organischen Material, sodass die Ränder des Mehrschichtsilikatmaterials an das polyvalente anionische organische Material gebunden sind, um ein mit einem polyvalenten anionischen organischen Rand beschichtetes Mehrschichtsilikatmaterial, in welches quarternäres Ammonium interkaliert ist, zu bilden;
(b) Härten des härtbaren Präpolymers, um das thermohärtbare Polymer zu verfestigen.

6. Verfahren nach Anspruch 5, worin das thermohärtbare Polymer ausgewählt wird aus der Gruppe, bestehend aus einem thermohärtbaren Epoxyharz, einem thermohärtbaren Phenol, einem thermohärtbaren Urethan, einem thermohärtbaren Gummi und Gemischen davon.

7. Verfahren nach Anspruch 5 oder Anspruch 6, worin das mit einem polyvalenten anionischen organischen Rand beschichtete Mehrschichtsilikatmaterial, in welches quarternäres Ammonium interkaliert ist, in Schritt (a) aufblättert, um einzelne Schichten aus Silikatmaterial und Mehrfachschichten aus Silikatmaterial zu bilden, wobei gemäß Bestimmung durch Transmissionselektronenmikroskopie die Gewichtsprozent der Einzelschichten aus Silikatmaterial größer als die Gewichtsprozent der Mehrfachschichten aus Silikatmaterial sind.

8. Verfahren nach Anspruch 5 oder Anspruch 7, worin das thermohärtbare Polymer ein Gemisch aus thermohärtbaren Polymeren ist.

9. Verfahren nach Anspruch 1, worin das thermoplastische Polymer ausgewählt wird aus der Gruppe, bestehend aus Polypropylen, Polyethylen, Polystrol, Polystyrolcopolymeren, Acrylpolymeren, Acetylpolymeren und thermoplastischen Elastomeren und Gemischen davon.

10. Zusammensetzung, umfassend:
(a) ein Polymer; und
(b) ein Mehrschichtsilikatmaterial, das in dem Polymer dispergiert ist, wobei das Mehrschichtsilikatmaterial Ränder aufweist, **dadurch gekennzeichnet, dass** mindestens ein Teil der Ränder des Mehrschichtsilikatmaterials an ein polyvalentes anionisches/organisches Material gebunden ist.

11. Zusammensetzung nach Anspruch 10, worin mindestens etwa eine Hälfte der Ränder des Mehrschichtsilikatmaterials an das polyvalente anionische organische Material gebunden ist.

12. Zusammensetzung nach Anspruch 10 oder Anspruch 11, worin das Polymer ausgewählt ist aus der Gruppe thermoplastischer Polymere und thermohärtbarer Polymere und Gemischen davon.

13. Zusammensetzung nach Anspruch 12, worin die thermoplastischen Polymere und thermohärtbaren Polymere ausgewählt sind aus der Gruppe, bestehend aus einem thermoplastischen Urethan, einem thermoplastischen Epoxyharz, einem thermoplastischen Polyester, einem thermoplastischen Nylon, einem thermoplastischen Polycarbonat, Polypropylen, Polyethylen, Polystyrol, Polystyrolcopolymeren, Acrylpolymeren, Acetylpolymeren, thermoplastischen Elastomeren, thermohärtbarem Epoxyharz, einem thermohärtbaren Phenol, einem thermohärtbaren Urethan, einem thermohärtbaren Gummi und Gemischen davon.

14. Verfahren nach den Ansprüchen 1 bis 9, worin das polyvalente anionische organische Material ein Polyacrylat ist.

15. Zusammensetzung nach den Ansprüchen 10 bis 13, worin das polyvalente anionische organische Material ein Polyacrylat ist.

16. Verfahren zum Herstellen eines Nanoverbundstoffpolymers, umfassend die Schritte:
(a) Mischen eines Mehrschichtsilikatmaterials, in welches ein quarternäres Ammonium interkaliert ist, mit einem Monomer, **dadurch gekennzeichnet, dass** das Mehrschichtsilikatmaterial, in welches quarternäres Ammonium interkaliert ist, umgesetzt worden ist mit einem polyvalenten anionischen organischen Material, sodass die Ränder des Mehrschichtsilikatmaterials an das polyvalente anionische organische Material gebunden sind, um ein mit einem polyvalentem anionischen organischen Rand beschichtetes Mehrschichtsilikatmaterial, in welches quarternäres Ammonium interkaliert ist, zu bilden; und
(b) Polymerisieren des Monomers.

17. Verfahren nach Anspruch 16, worin das Monomer ein Gemisch von Monomeren ist.

18. Verfahren nach Anspruch 16, worin das Polymer ausgewählt wird aus der Gruppe, bestehend aus einem thermoplastischen Urethan, einem thermoplastischen Epoxyharz, einem thermoplastischen Polyester, einem thermoplastischen Nylon, einem thermoplastischen Polycarbonat, Polypropylen, Polyethylen, Polystyrol, Polystyrolcopolymeren, Acrylpolymeren, Acetylpolymeren, thermoplastischen Elastomeren, thermohärtbarem Epoxyharz, einem thermohärtbaren Phenol, einem thermohärtbaren Urethan, einem thermohärtbaren Gummi und Gemischen davon.

19. Verfahren nach Anspruch 18, worin das polyvalente anionische organische Material ein Polyacrylat ist.

## Revendications

1. Procédé de production d'un nanocomposite à matrice de polymère, par dispersion d'un matériau silicate multicouche dans un polymère thermoplastique, qui comprend l'étape consistant à mélanger un matériau silicate multicouche où est intercalé un composé ammonium quaternaire, avec le polymère thermoplastique, à une température supérieure au point de fusion ou de ramollissement du polymère thermoplastique, procédé **caractérisé en ce que** l'on a fait réagir le matériau silicate multicouche où est intercalé un composé ammonium quaternaire, avec une matière organique anionique polyvalente de telle sorte que les bords du matériau silicate multicouche sont liés à la matière organique anionique polyvalente pour former un matériau silicate multicouche où est intercalé un composé ammonium quaternaire, revêtu sur les bords de matière organique anionique polyvalente.

2. Procédé selon la revendication 1, dans lequel le polymère thermoplastique est un polymère choisi parmi les polyuréthanes thermoplastiques, les époxy thermoplastiques, les polyesters thermoplastiques, les nylons thermoplastiques, les polycarbonates thermoplastiques et leurs mélanges.

3. Procédé selon la revendication 1 ou 2, dans lequel le matériau silicate multicouche où est intercalé un composé ammonium quaternaire, traité sur les bords par une matière organique anionique polyvalente, s'exfolie pour produire des couches simples de matériau silicate et des couches multiples de matériau silicate, le pourcentage en poids des couches simples de matériau silicate étant supérieur au pourcentage en poids des couches multiples de matériau silicate, ces pourcentages étant déterminés par microscopie électronique par transmission.

4. Procédé selon la revendication 1 ou 3, dans lequel le polymère thermoplastique est un mélange de polymères thermoplastiques.

5. Procédé de production d'un nanocomposite à matrice de polymère, par dispersion d'un matériau silicate multicouche dans un polymère thermodurcissable, qui comprend les étapes consistant à :
(a) mélanger un matériau silicate multicouche où est intercalé un composé ammonium quaternaire, avec un prépolymère thermodurcissable, cette étape étant **caractérisée en ce que** l'on a fait réagir le matériau silicate multicouche où est intercalé un composé ammonium quaternaire, avec une matière organique anionique polyvalente de façon à ce que les bords du matériau silicate multicouche soient liés à la matière organique anionique polyvalente pour former un matériau silicate multicouche où est intercalé un composé ammonium quaternaire, revêtu sur les bords de matière organique anionique polyvalente,
(b) faire cuire le prépolymère thermodurcissable pour faire durcir le polymère thermodurcissable.

6. Procédé selon la revendication 5, dans lequel le polymère thermodurcissable est un polymère choisi parmi les résines époxy thermodurcissables, les résines phénoliques thermodurcissables, les polyuréthanes thermodurcissables, les caoutchoucs thermodurcissables et leurs mélanges.

7. Procédé selon la revendication 5 ou 6, dans lequel le matériau silicate multicouche où est intercalé un composé ammonium quaternaire, revêtu sur les bords d'une matière organique anionique polyvalente, s'exfolie dans l'étape (a) pour produire des couches simples de matériau silicate et des couches multiples de matériau silicate, le pourcentage en poids des couches simples de matériau silicate étant supérieur au pourcentage en poids des couches multiples de matériau silicate, ces pourcentages étant déterminés par microscopie électronique par transmission.

8. Procédé selon la revendication 5 ou 7, dans lequel le polymère thermodurcissable est un mélange de polymères thermodurcissables.

9. Procédé selon la revendication 1, dans lequel le polymère thermoplastique est un polymère choisi parmi le polypropylène, le polyéthylène, le polystyrène, les copolymères de styrène, les polymères acryliques, les polymères acétylés, les élastomères thermoplastiques et leurs mélanges.

10. Composition comprenant :
(a) un polymère, et
(b) un matériau silicate multicouche dispersé dans le polymère, ce matériau silicate multicouche présentant des bords, la composition étant **caractérisée en ce qu'**au moins une partie des bords du matériau silicate multicouche est liée à une matière organique anionique polyvalente.

11. Composition selon la revendication 10, dans laquelle au moins environ une moitié des bords du matériau silicate multicouche est liée à la matière organique anionique polyvalente.

12. Composition selon la revendication 10 ou 11, dont le polymère est un polymère choisi parmi les polymères thermoplastiques, les polymères thermodurcissables et leurs mélanges.

13. Composition selon la revendication 12, dont le polymère thermoplastique ou le polymère thermodurcissable est choisi parmi les polyuréthanes thermoplastiques, les époxy thermoplastiques, les polyesters thermoplastiques, les nylons thermoplastiques, les polycarbonates thermoplastiques, le polypropylène, le polyéthylène, le polystyrène, les copolymères de styrène, les polymères acryliques, les polymères acétylés, les élastomères thermoplastiques, les résines époxy thermodurcissables, les résines phénoliques thermodurcissables, les polyuréthanes thermodurcissables, les caoutchoucs thermodurcissables et leurs mélanges.

14. Procédé selon l'une quelconque des revendications 1 à 9, dans lequel la matière organique anionique polyvalente est un polyacrylate.

15. Composition selon l'une quelconque des revendications 10 à 13, dans laquelle la matière organique anionique polyvalente est un polyacrylate.

16. Procédé de production d'un nanocomposite à matrice de polymère, qui comprend les étape consistant à :
(a) mélanger un matériau silicate multicouche où est intercalé un composé ammonium quaternaire, avec un monomère, cette étape étant **caractérisée en ce que** l'on a fait réagir le matériau silicate multicouche où est intercalé un composé ammonium quaternaire, avec une matière organique anionique polyvalente, de façon à ce que les bords du matériau silicate multicouche soient liés à la matière organique anionique polyvalente pour former un matériau silicate multicouche où est intercalé un composé ammonium quaternaire, revêtu sur le bords de la matière organique anionique polyvalente, et
(b) polymériser le monomère.

17. Procédé selon la revendication 16, dans lequel le monomère est un mélange de monomères.

18. Procédé selon la revendication 16, dans lequel le polymère est un polymère choisi parmi les polyuréthanes thermoplastiques, les époxy thermoplastiques, les polyesters thermoplastiques, les nylons thermoplastiques, les polycarbonates thermoplastiques, le polypropylène, le polyéthylène, le polystyrène, les copolymères de styrène, les polymères acryliques, les polymères acétylés, les élastomères thermoplastiques, les résines époxy thermodurcissables, les résines phénoliques thermodurcissables, les polyuréthanes thermodurcissables, les caoutchoucs thermodurcissables et leurs mélanges.

19. Procédé selon la revendication 18, dans lequel la matière organique anionique polyvalente est un polyacrylate.
